Europäisches Patentamt

European Patent Office

Office européen des brevets

(11) Publication number: **0 457 335 A2**

## EUROPEAN PATENT APPLICATION

(21) Application number: 91107979.6

(22) Date of filing: 16.05.91

(51) Int. Cl.⁵: **B29C 33/62**, B29C 33/40, //B29K83:00

(30) Priority: 17.05.90 IT 2035190

(43) Date of publication of application:
21.11.91 Bulletin 91/47

(84) Designated Contracting States:
BE DE ES FR GB GR NL

(71) Applicant: AUSIMONT S.p.A.
31, Foro Buonaparte
I-20121 Milano(IT)

(72) Inventor: Pasetti, Adolfo
2, Piazza Sesia
I-20127 Milan(IT)
Inventor: Moggi, Giovanni
14, Via G. Galilei
I-20124 Milan(IT)

(74) Representative: Weinhold, Peter, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Siegfriedstrasse 8
W-8000 München 40(DE)

(54) **Process for reproducing works of art and articles manufactured from lapideous material or metal.**

(57) Described is a process for reproducing works of art and articles manufactured from natural or artificial lapideous material or metal which utilizes silicone rubber in order to obtain the negative shape of the article to be reproduced and wherein a layer of fluorinated polymer based on vinylidene fluoride is applied prior to the application of said silicone rubber.

EP 0 457 335 A2

The present invention relates to a process for reproducing works of art and articles manufactured from natural or artificial lapideous material or metal.

There is a technique for reproducing sculptures or other manufactured articles which utilizes silicone rubbers as material for forming the negative of the article to be reproduced. This technique permits to obtain a very exact reproduction of the article and an easy detaching of the negative, but it is affected by the drawback of leaving residues which cause color alterations or other modifications of the outer appearance, thus being not consistent with the aesthetic requirements of a work of art.

These residues cannot be removed by the usual solvents utilized to dissolve silicones without the risk of irreparably damaging the work of art. Furthermore, they can cause some problems if the necessity of a restoration should occur, as they are gradually absorbed by the work of art.

It was possible to improve said technique by using, as detaching agents, greases based on polytetrafluoroethylene and liquid perfluoropolyether, as described in US-A-4,824,626. According to said process it is necessary, once the detachment of the silicone rubber negative has been carried out, to remove the detaching agent by means of a proper chlorinated or chlorofluorinated solvent such as, for example, 1,1,2-trichlorotrifluoroethane.

Said washing operation, above all, exerts a mechanical action on the polytetrafluoroethylene which is contained in the grease as a thickening agent in the form of a fine powder: being per se insoluble in 1,1,2-trichlorotrifluoroethane, the polytetrafluoroethylene is removed in the form of a suspension.

The washing also has the function of dissolving the perfluoropolyether: the solubilization is either complete or only partial, depending on the intensity of the treatment with the solvent and on the nature of the material onto which the detaching agent has been applied.

Generally, it does not cause problems if the perfluoropolyether is not completely removed because perfluoropolyethers, as is well known (for example from US-A-4,499,146), exert a protective action on the lapideous materials towards the aggression of atmospheric agents.

In some cases, however, said protective effect attributable to the presence of the perfluoropolyether is not desired in consideration of the successive preservation conditions of the work of art or of the manufactured article (for example in a confined environment), which makes the action of a protective agent useless and suggests the absence of any foreign materials.

A further drawback may be encountered when the above technique is utilized for lapideous materials having a medium to high porosity, since in such a case it is difficult or even impossible to completely remove the polytetrafluoroethylene: since it is present in the form of a fine white powder, it penetrates into the pores of the material and causes chromatic alterations, which are particularly apparent in natural lapideous materials such as colored sandstones and artificial lapideous materials such as bricks (for example brickwork friezes and bas-reliefs).

It has now surprisingly been found that it is possible to overcome said drawbacks by using, as detaching agent, a fluorinated polymer based on vinylidene fluoride, which is easily and completely removable by means of a suitable solvent after separation of the negative.

Thus the present invention provides a process for reproducing works of art and articles manufactured from natural or artificial lapideous material or metal, wherein use is made of silicone rubbers to obtain the negative form of the work of art or article and wherein a (preferably thin) layer of fluorinated polymer based on vinylidene fluoride is applied onto the work of art or article prior to the application of the silicone rubber.

The fluorinated polymer is a vinylidene fluoride homopolymer or copolymer which preferably has the following composition (expressed in % by mols): (a) vinylidene fluoride 50 to 100, preferably 60 to 100; (b) hexafluoropropene 0 to 30; (c) tetrafluoroethylene 0 to 30; (d) chlorotrifluoroethylene 0 to 40.

The number average molecular weight $\overline{M}_n$ of said polymer generally ranges from about $5.10^3$ to about $5.10^5$, preferably from about $5.10^4$ to about $3.10^5$.

Among the above polymers there are preferably utilized the vinylidene fluoride terpolymers and copolymers having elastomeric properties, composed of:

(i) vinylidene fluoride (50 to 85% by mols);
(ii) hexafluoropropene (15 to 25% by mols);
(iii) tetrafluoroethylene (0 to 25% by mols).

These are non-vulcanized fluoroelastomers, utilized as such or in admixture with one another. Examples of suitable copolymers which are commercially available are Tecnoflon NH® and Viton A® (21% by mols of hexafluoropropene, 79% by mols of vinylidene fluoride), whereas suitable commercially available terpolymers are known as, e.g., Tecnoflon TN® and Viton B®.

The fluorinated polymer is preferably applied - usually by brushing or spraying - in the form of a solution in an organic solvent, generally at a concentration of from about 1 to about 8% by weight, preferably about 2 to about 5% by weight.

As organic solvents there are generally utilized ketones and/or esters, such as methylethylketone, cyclohexanone, acetone, ethyl acetate and butyl acetate, optionally in admixture with a chlorofluorocarbon. In particular, in the case of the fluoroelastomers, an azeotropic mixture of acetone (12.5% by weight) and 1,1,2-trichlorotrifluoroethane (87.5% by weight), commercially known as Delifrene AC® and produced by Montefluos, may be utilized to particular advantage.

It is also possible to apply the fluorinated polymer in the form of an aqueous emulsion, preparable starting from the product directly obtained from the polymerization to which a suitable stabilizer such as Triton X 100® is added and which is optionally diluted with deionized water until reaching a concentration of about 2 to about 6% by weight. When an aqueous emulsion is utilized the application thereof is preferably carried out by brushing.

It has been found that by applying one of the above products, preferably in an amount of from 3 to 100 g/m² of article surface, particularly 5 to 40 g/m², depending on the degree of porosity of the material which the article to be reproduced is made of, a detaching layer is generated which is easily and completely removable, after separation of the negative, by means of washing with one of the above solvents.

It was not foreseeable that the fluorinated polymer can act effectively as detaching agent: in fact, the polar nature of the polymeric chain based on vinylidene fluoride would be expected to cause a higher adhesiveness and a worse removability as compared to perfluorinated polymers such as polytetrafluoroethylene and perfluoropolyethers.

In some cases it was observed that the fluorinated polymer layer can detach, at least in part, from the article surface at the moment at which the silicone rubber negative is removed: the removal is then completed, if necessary, by washing with a solvent.

The complete removal of the fluorinated polymer from the article surface may be verified by recording the infrared spectrum of the powder obtained by scraping off some of said surface: the obtained spectrum should not exhibit the typical absorptions of the C-F and C-H bonds.

The following examples are given to merely illustrate, but not to limit the present invention.

Example 1

Three specimens A, B, C (10x5x1 cm) of "Pietra di Fiorenzuola" (a sandstone having a porosity of about 10%) were utilized. On specimen A, which had not been subjected to any treatment, an approximately 0.5 cm thick layer of liquid silicone rubber was applied, which after about 60 minutes set to form a consistent mass.

On specimen B there was uniformly spread a grease layer based on polytetrafluoroethylene and liquid perfluoropolyether (Fomblin RT 15®) in an amount of 100 g/m². Subsequently, as on specimen A, the silicone rubber layer was applied.

Onto specimen C there was applied (by brushing) a solution (3% by weight in Delifrene AC®)of the fluoroelastomer Tecnoflon NH® ($\overline{M}_n \approx 2.10^5$) in an amount of 30 g of polymer per m² of surface and the solvent was evaporated. Subsequently, as with specimens A and B, the silicone rubber layer was applied.

After 24 hours, the silicone rubber layers were removed from the three specimens by means of tearing.

The obtained results were as follows:

Specimen A: The surface exhibited traces of a crosslinked polymeric substance, not removable by means of the usual solvents for silicone products (ketone-alcohol mixtures). This material, removed by scraping and analyzed by infrared spectroscopy, exhibited the typical absorptions of a silicone rubber.

Specimen B: The surface appeared greasy due to the presence of the fluorinated grease; by means of rubbing with cotton wool imbued with trichlorotrifluoroethane and then by means of brush-washing with the same solvent, the components of the fluorinated grease were partially removed; by evaporation of the solvent utilized in the preceding washing steps, a waxy residue was obtained which exhibited, on infrared analysis, the typical absorptions of the C-F bond; by scraping the specimen surface, a powder was obtained which, subjected to infrared analysis, was found to contain C-F bonds. The powder was extracted with 1,1,2-trichlorotrifluoroethane. The dissolved portion, after evaporation of the solvent, provided an IR-spectrum which exhibited absorption bands which are typical of perfluoropolyethers; this proves that the grease had not completely been removed during the treatments with the solvent. The powder residue provided an IR-spectrum which showed absorptions in the area of the C-F bonds and, on differential thermal analysis, exhibited a melting point of 327°C, which is typical of polytetrafluoroethylene.

Specimen C: The surface appeared slightly opalescent due to the presence of the thin fluorinated elastomer layer; by means of rubbing with cotton-wool imbued with acetone and subsequently by means of brush-washing with the same solvent, the fluoroelastomer was removed. By evaporation of the solvent utilized for the washing step, a residue was obtained which, on infrared analysis, exhibited the typical spectrum of a vinylidene fluoride-hexafluoropropene copolymer (C-H and C-F bonds). By scraping off the specimen surface, a powder was obtained which, subjected to infrared analysis, did not show absorptions of C-F bonds or C-H bonds.

Example 2

The tests of example 1 were repeated, but using brick specimens having a 40% porosity. Results similar to those of example 1 were obtained and, furthermore, a variation in the original color shade was observed on specimen B.

Example 3

There were utilized two bronze specimens, measuring 5x5x0.5 cm and obtained by cutting a bronze plate exposed for a few decennia to the atmosphere. Only the specimen surfaces which had undergone natural ageing and which were washed with atomized water prior to the subsequent treatments were examined.

Onto the upper surface of a specimen A, without having subjected it to any treatment, an about 0.7 cm thick layer of liquid silicone rubber was applied which, within about 60 minutes, set to give a consistent mass. Onto the upper surface of specimen B there was applied, by means of spraying, a solution (in Delifrene AC®, at 3% by weight) of the fluoroelastomer Tecnoflon NH® in an amount of 8 g polymer per $m^2$ of surface. Subsequently, as on specimen A, a silicone rubber layer was applied.

The following results were obtained:

Specimen A: The surface exhibited traces of a cross linked polymeric substance, not removable by the usual solvents for silicone products (mixtures of ketones and alcohols). This material, removed by scraping and analyzed by infrared spectroscopy, exhibited the typical absorptions of a silicone rubber.

Specimen B: The surface appeared opaque; by means of brush-washings with acetone, the fluoroelastomer was removed and the surface regained the same appearance as prior to the treatment. By evaporation of the acetone extract a residue was obtained which exhibited the infrared spectrum of a vinylidene fluoride-hexafluoropropene copolymer with absorptions in the area of the C-H and C-F bonds. Metal shavings obtained from the washed surface were immersed into acetone. The acetone extract did not exhibit absorptions in the areas of the C-H and C-F bonds. Consequently, the fluoroelastomer had thoroughly been removed during the brush-washing with acetone.

Claims

1. Process for reproducing works of art and articles manufactured from natural or artificial lapideous material or from metal and utilizing silicone rubber to obtain the negative form of the work of art or article, wherein a layer of vinylidene fluoride-based polymer is applied onto the work of art or manufactured article prior to the application of the silicone rubber.

2. Process according to claim 1, wherein said fluorinated polymer is composed of 50 to 100% by mols of vinylidene fluoride, 0 to 30% by mols of hexafluoropropene, 0 to 30% by mols of tetrafluoroethylene and 0 to 40% by mols of chlorotrifluoroethylene.

3. Process according to any one of claims 1 and 2, wherein said fluorinated polymer is a terpolymer or a copolymer composed of 50 to 85% by mols of vinylidene fluoride, 15 to 25% by mols of hexafluoropropene and 0 to 25% by mols of tetrafluoroethylene.

4. Process according to any one of claims 1 to 3, wherein said fluorinated polymer is applied in the form of a solution in an organic solvent.

5. Process according to any one of claims 1 to 3, wherein said fluorinated polymer is applied in the form of an aqueous emulsion.

6. Process according to claim 4, wherein said organic solvent is selected from ketones and esters, optionally in admixture with a chlorofluorocarbon.

7. Process according to any one of claims 1 to 6, wherein said fluorinated polymer is applied in an amount of from 3 to 100 $g/m^2$ of surface of the work of art or manufactured article.

8. Process according to claim 7, wherein said fluorinated polymer is applied in an amount of from 5 to 40 $g/m^2$ of surface of work of art or manufactured article.